# EUROPÄISCHE PATENTSCHRIFT

(11) **EP 1 280 878 B1**
(45) Veröffentlichungstag und Bekanntmachung des Hinweises auf die Patenterteilung: **15.08.2007**
(21) Anmeldenummer: 01931664.5
(22) Anmeldetag: 27.04.2001
(51) Int. Cl.: C11D 3/00, C11D 3/12, D06M 11/45, D06M 11/46, D06M 11/49

(54) **VERWENDUNG VON NANOSKALIGEN TEILCHEN ZUR VERBESSERUNG DER SCHMUTZABLÖSUNG**
USE OF NANOSCALE PARTICLES FOR IMPROVING DIRT REMOVAL
UTILISATION DE PARTICULES NANOSCOPIQUES POUR FACILITER L'ENLEVEMENT DES SALISSURES

(30) Priorität: 04.05.2000 DE 10021726
(43) Veröffentlichungstag der Anmeldung: 05.02.2003
(73) Patentinhaber: Henkel Kommanditgesellschaft auf Aktien, 40589 Düsseldorf (DE)
(72) Erfinder: ZÜCHNER, Lars, 40591 Düsseldorf (DE); LANGE, Ilona, 40764 Langenfeld (DE); SPECKMANN, Horst-Dieter, 40764 Langenfeld (DE); PENNINGER, Josef, 40724 Hilden (DE)
(86) Internationale Anmeldenummer: PCT/EP2001/004781
(87) Internationale Veröffentlichungsnummer: WO 2001/083662

(56) Entgegenhaltungen:
- EP-A- 0 407 187
- EP-A- 1 111 036
- WO-A-01/27236
- WO-A-01/32820
- US-A- 3 956 162
- US-A- 4 968 445
- US-A- 5 364 550
- US-A- 5 460 701
- PATENT ABSTRACTS OF JAPAN vol. 1996, no. 10, 31. Oktober 1996 (1996-10-31) & JP 08 151597 A (LION CORP), 11. Juni 1996 (1996-06-11)

## Beschreibung

Die vorliegende Erfindung betrifft die Verwendung von Partikeln mit einer Teilchengröße von 5 bis 500 nm zur Verbesserung der Schmutzablösung von und/oder Reduzierung der Wiederanschmutzbarkeit auf Oberflächen.

Bei der Verarbeitung von Textilien spielt die Textilveredelung, insbesondere die Textilausrüstung, eine wichtige Rolle. Mit Hilfe von entsprechenden Hilfsmitteln werden die Eigenschaften der Textilien derart verändert, dass sie leichter zu pflegen sind. Beispiele für Veredelungsmaßnahmen sind die Verbesserung der Knittererholung und Dimensionsstabilität, das Bleichen und die Behandlung mit optischen Aufhellern beziehungsweise Färben, das Ausstatten mit weichmachenden Ausrüstungen zur Veränderung des Griffs, die Hydrophilieausrüstung zur Erhöhung des Wasseraufnahmevermögens. Um die Ablagerung von Schmutz zu verhindern oder dessen Auswaschbarkeit zu erleichtern, erhalten die Textilien eine sogenannte Soil-Release-Ausrüstung (schmutzabweisende Ausrüstung).

Neben dieser permanenten Ausrüstung der Textilien bei deren Herstellung werden einige der beschriebenen Hilfsmittel u.a. auch in Textilwaschmitteln bzw. Vor- oder Nachbehandlungsmitteln eingesetzt, um dort eine temporäre Anwendung zu erreichen. Beispielsweise werden den Waschmitteln entsprechende Soil-Release-Polymere zugefügt, die dann eine verringerte Wiederanschmutzbarkeit - auch bereits während des Waschzyklus durch Wiederabsetzen des abgelösten Schmutzes - zur Folge haben.

Bei Beobachtungen in der Natur hat man festgestellt, daß Oberflächen von Pflanzen schmutzabweisende Eigenschaften besitzen, da sich auf diesen Oberflächen Schmutzpartikel nicht nachhaltig ablagern können. Derartige Oberflächen sind dazu in der Lage, sich durch Regen oder bewegtes Wasser zu reinigen. Diese Wirkung wird auf die sich auf der Oberfläche befindlichen Wachsschichten und insbesondere auf deren Oberflächenstruktur zurückgeführt.

Im europäischen Patent EP 0772 514 wird eine den Pflanzen nachgebildete selbstreinigende Oberfläche von Gegenständen offenbart, die eine künstliche Oberflächenstruktur aus Erhebungen und Vertiefungen aufweist und dadurch gekennzeichnet ist, daß der Abstand zwischen den Erhebungen im Bereich von 5 bis 200 µm und die Höhe der Erhebungen im Bereich von 5 bis 100 µm liegen und mindestens die Erhebungen aus hydrophoben Polymeren und haltbar hydrophierten Materialien bestehen und die Erhebungen nicht durch Wasser oder durch Wasser mit Detergentien ablösbar sind.

Die aus dem Stand der Technik bekannten Textilien weisen eine dauerhaft (permanent) veränderte Oberfläche auf. Ein permanente Veränderung von textilen Oberflächen ist insbesondere im Bereich der Bekleidung nicht immer erwünscht. Der Verbraucher wünscht zum einen natürliche Textilien, mit den diesen Textilien zugeschriebenen positiven Eigenschaften, zum anderen sollen diese Textilien hinsichtlich der Pflegeeigenschaften möglichst die Vorteile von synthetischen Textilien aufweisen.

Der vorliegenden Erfindung lag die Aufgabe zugrunde, ein Wasch-, Vor- oder Nachbehandlungsmittel zur Verfügung zu stellen, das geeignet ist, Oberflächen insbesondere temporär derart zu verändern, daß eine Verbesserung der Ablösbarkeit der Anschmutzungen erreicht wird und der Oberfläche temporär schmutzabweisende Eigenschaften verliehen werden. Eine weitere Aufgabe besteht darin, die gewünschte Verbesserung insbesondere für textile Oberflächen, vorzugsweise für natürliche Materialien wie Baumwolle, zu erreichen.

Überraschenderweise wurde festgestellt, daß durch den Einsatz von Partikeln mit einer Teilchengröße von 5 bis 500 nm Oberflächen, d.h. sowohl harten als auch textilen Oberflächen, eine deutliche Steigerung der Hydrophilie erreicht wird und somit auch die Schmutzablösung von den Oberflächen verbessert wird und ihnen auch temporär schmutzabweisende Eigenschaften verliehen werden können. Durch die Verwendung der Partikel wird eine Strukturierung der Oberfläche bewirkt, wodurch auf textilien Oberflächen von Baumwolle oder Baumwollmischgeweben, die oben beschriebenen Effekte auftreten.

Temporäre Veränderung der Oberfläche im Sinne der vorliegenden Erfindung bedeutet, daß die Wirkung nach einigen, insbesondere bis zu 4 Wasch- oder Reinigungszyklen aufrechterhalten werden kann.

Gegenstand der vorliegenden Erfindung ist demgemäß die Verwendung von Partikeln mit einer Teilchengröße von 5 bis 500 nm zur Verbesserung der Schmutzablösung von und/oder Reduzierung der Wiederanschmutzbarkeit auf textilen Oberflächen von Baumwolle oder Baumwolle-Mischgeweben.

Bei den erfindungsgemäß eingesetzten Partikeln handelt es sich vorzugsweise um wasserunlösliche bzw. nur wenig in Wasser lösliche Partikel, die vorübergehend auf dem Textil verbleiben. Diese Partikel weisen erfindungsgemäß eine Teilchengröße von 5 bis 500 nm, vorzugsweise von 5 bis 25C nm, auf. Wegen der Teilchengröße werden diese Partikel auch als nanoskalige Partikel bezeichnet. Es können als Partikel beliebige unlösliche Feststoffe eingesetzt werden, die in der genannten Größenverteilung vorliegen. Beispiele für geeignete Partikel sind beliebige Fällungskieselsäuren, Aerogele, Xerogele, Mg(OH)₂, Böhmit (Al(O)OH). ZrO₂, ZnO, CeO₂, Fe₂O₃, Fe₃O₄, TiN, Hydroxylapatit, Bentonite, Hektorit, SiO₂:CeO₂ (mit CeO₂ dotiertes SiO₂), SnO₂, ln₂O₃:SnO₂, MgAl₂O₄, HfO₂, Sole, wie SiO₂-Sole, Al₂O₃-Sole oder TiO₂-Sole, sowie beliebige Gemische der voranstehenden.

Oberflächen im Sinne der vorliegenden Erfindung sind die zu behandelnden textilen Oberflächen von Baumwolle oder Baumwollmischgeweben.

In einer besonders bevorzugten Ausgestaltung der vorliegenden Erfindung werden die Partikel in Mitteln zur Textilbehandlung, insbesondere zur Textilvorbehandlung als auch zur Textilnachbehandlung und zur Textilwäsche eingesetzt. Die Partikel können auch in der Textilbehandlung in der Textilindustrie eingesetzt werden, wobei die Partikel sowohl zur permanenten als auch zur temporären Textilbehandlung verwendet werden können.

Der Gehalt dieser nanoskaligen Partikel in derartigen Mitteln sollte so bemessen sein, dass die Oberfläche, insbesondere die Textiloberfläche, ausreichend bedeckt ist. Vorzugsweise enthalten die Mittel 0,01 bis 35 Gew.-%, besonders bevorzugt 0,01 bis 20 Gew.-% und insbesondere 0,5 bis 10 Gew.-%, der nanoskaligen Partikel, bezogen auf das fertige Mittel.

Die Konzentration der erfindungsgemäß eingesetzten nanoskaligen Partikel in der Anwendungslösung liegt vorzugsweise zwischen 0,001 und 10 Gew.-%, insbesondere zwischen 0,01 und 2 Gew.-%, bezogen auf die Anwendungslösung. Der pH-Wert der Anwendungslösung liegt vorzugsweise zwischen 6 und 12, insbesondere zwischen 7 und 10,5. In diesem pH-Bereich werden besonders gute Ergebnisse hinsichtlich Wiederanschmutzung und Ablösbarkeit des Schmutzes erreicht.

Eine weitere Verbesserung bei der Schmutzablösung und der Reduzierung der Wiederanschmutzung kann dadurch erreicht werden, wenn die Oberfläche der nanoskaligen Partikel modifiziert wird. Dies kann beispielsweise durch übliche Komplexbildner erfolgen, wodurch die Ausfällung von Ca- bzw. Mg-Salzen verhindert werden kann. Diese Verbindungen können in einer solchen Menge aufgebracht werden, daß sie im fertigen Mittel in Mengen von 1 bis 8 Gew.-%, vorzugsweise von 3,0 bis 6,0 Gew.-% und insbesondere 4,0 bis 5,0 Gew.-%, bezogen auf das fertige Mittel, enthalten sind. Üblicherweise befinden sie sich auf der Oberfläche der Partikel.

Eine bevorzugte Klasse von Komplexbildnern sind die Phosphonate. Zu diesen bevorzugten Verbindungen zählen insbesondere Organophosphonate wie beispielsweise 1-Hydroxyethan-1,1-diphosphonsäure (HEDP), Aminotri(methylenphosphonsäure) (ATMP), Diethylentriamin-penta(methylenphosphonsäure) (DTPMP bzw. DETPMP) sowie 2-Phosphonobutan-1,2,4-tricarbonsäure (PBS-AM), die zumeist in Form ihrer Ammonium- oder Alkalimetallsalze eingesetzt werden. Die Phosphonate werden in einer solchen Menge auf die Oberfläche der Partikel aufgebracht, daß sie im fertigen Mittel in Mengen von 0,01 bis 2,0 Gew.-%, vorzugsweise 0,05 bis 1,5. Gew.-% und insbesondere von 0,1 bis 1,0 Gew.-% enthalten sind.

Ferner können als Komplexbildner Stoffe eingesetzt werden, die Schwermetalle komplexieren. Geeignete Schwermetallkomplexbildner sind beispielsweise Ethylendiamintetraessigsäure (EDTA) oder Nitrilotriessigsäure (NTA) in Form der freien Säuren oder als Alkalimetallsalze und Derivate der voranstehenden sowie Alkalimetallsalze von anionischen Polyelektrolyten wie Polymaleaten und Polysulfonaten.

Weitere geeignete Komplexbildner sind niedermolekulare Hydroxycarbonsäuren wie Citronensäure, Weinsäure, Äpfelsäure, Milchsäure oder Gluconsäure bzw. deren Salze, wobei Citronensäure oder Natriumcitrat besonders bevorzugt sind.

Die Modifikation der Oberfläche der Partikel kann beispielsweise durch einfaches Verrühren einer Suspension der Partikel mit dem Komplexbildner erfolgen, dieser zieht während des Verrührens auf die Oberfläche der Partikel auf.

Für den Fachmann ist es offensichtlich, daß nicht die gesamte Menge an Komplexbildner, die in die Mittel eingearbeitet werden sollen, auf die nanoskaligen Partikel aufgebracht werden muß. Es ist auch möglich, diese Verbindungen ganz oder teilweise unmittelbar einzuarbeiten.

Eine weitere Steigerung der Benetzbarkeit der zu behandelnden Oberflächen läßt sich auch durch den Zusatz von Hydrophilierungsmitteln erreichen. Beispiele für derartige Hydrophilierungsmittel sind ein- oder mehrwertigen Alkohole, Alkanolamine oder Glycolether, sofern sie mit Wasser mischbar sind. Vorzugsweise werden die Hydrophilierungsmittel ausgewählt aus Ethanol, n-oder i-Propanol, Butanolen, Ethylenglykolmethylether, Ethylenglykolethylether, Ethylenglykolpropylether, Ethylenglykolmono-n-butylether, Diethylenglykol-methylether, Diethylenglykolethylether, Propylenglykolmethyl-, -ethyl- oder - propyl-ether, Dipropylenglykolmonomethyl-, oder -ethylether, Diisopropylenglykolmonomethyl-, oder -ethylether, Methoxy-, Ethoxy- oder Butoxytriglykol, 1-Butoxyethoxy-2-propanol, 3-Methyl-3-methoxybutanol, Propylen-glykol-t-butylether, Alkoholen, insbesondere C₁-C₄-Alkanole, Glykole, Polyethylenglykole, vorzugsweise mit einem Molekulargewicht zwischen 100 und 100 000, insbesondere zwischen 200 und 10 000, und Polyolen, wie Sorbitol und Mannitol, sowie bei Raumtemperatur flüssiges Polyethylenglykol, Carbonsäureestern, Polyvinylalkoholen, Ethylenoxid-Propylenoxid-Blockcopolymeren sowie beliebigen Gemischen der voranstehenden.

Die erfindungsgemäß verwendeten Partikel können sowohl in flüssige bis gelförmige oder auch in fester Form vorliegende Mittel eingearbeitet werden.

Liegen die Mittel in flüssiger bis gelförmiger Form vor, so handelt es sich in der Regel um wäßrige Zubereitungen, die ggf. noch weitere, mit Wasser mischbare organische Lösungsmittel sowie Verdickungsmittel enthalten. Zu den mit Wasser mischbaren organischen Lösungsmitteln zählen z. B. die oben Hydrophilierungsmittel genannten Verbindungen. Die Herstellung von flüssigen bis gelförmigen Zubereitungen kann kontinuierlich oder batchweise durch einfaches Vermischen der Bestandteile, ggf. bei erhöhter Temperatur erfolgen.

Zur Einstellung der Viskosität können einer flüssigen Zusammensetzung ein oder mehrere Verdickungssysteme zugesetzt werden. Die Viskosität flüssiger bis gelförmiger Zusammensetzungen kann mit üblichen Standardmethoden (beispielsweise Brookfield-Viskosimeter RVD-VII bei 20 U/min und 20°C, Spindel 3) gemessen werden und liegt vorzugsweise im Bereich von 100 bis 5000 mPas. Bevorzugte Zusammensetzungen haben

Viskositäten von 200 bis 4000 mPas, wobei Werte zwischen 400 und 2000 mPas besonders bevorzugt sind.

Geeignete Verdicker sind anorganische oder polymere organische Verbindungen. Es können auch Gemische aus mehreren Additiven eingesetzt werden.

Zu den anorganischen Verdickern zählen beispielsweise Polykieselsäuren, Tonmineralien wie Montmorillonite, Zeolithe, Kieselsäuern und Bentonite.

Die organischen Verdicker stammen aus den Gruppen der natürlichen Polymere, der abgewandelten natürlichen Polymere und der vollsynthetischen Polymere. Diese auch Quell(ungs)mittel genannten, meist hochmolekularen Stoffe, saugen die Flüssigkeiten auf, quellen dabei und gehen schließlich in zähflüssige echte oder kolloide Lösungen über.

Aus der Natur stammende Polymere, die als rheologische Additive Verwendung finden, sind beispielsweise Agar-Agar, Carrageen, Tragant, Gummi arabicum, Alginate, Pektine, Polyosen, Guar-Mehl, Johannisbrotbaumkernmehl, Stärke, Dextrine, Gelatine und Casein.

Abgewandelte Naturstoffe stammen vor allem aus der Gruppe der modifizierten Stärken und Cellulosen, beispielhaft seien hier Carboxymethylcellulose und andere Celluloseether, Hydroxyethyl- und -propylcellulose sowie Kemmehlether genannt.

Eine große Gruppe von Verdickern, die breite Verwendung in den unterschiedlichsten Anwendungsgebieten finden, sind die vollsynthetischen Polymere wie Polyacryl- und Polymethacryl-Verbindungen, Vinylpolymere, Polycarbonsäuren, Polyether, Polyimine, Polyamide und Polyurethane.

Die Verdicker können in einer Menge bis zu 10 Gew.-%, vorzugsweise von 0,05 bis 5 Gew.-%, und besonders bevorzugt von 0,1 bis 3 Gew.-%, bezogen auf die fertige Zusammensetzung, enthalten sein.

Darüber hinaus können auch tensidische Verdicker eingesetzt werden, z. B. Alkylpolyglycoside, wie C₈₋₁₀-Alkylpolyglucosid (APG^{®} 220, Hersteller: Henkel KGaA) ; C₁₂₋₁₄-Alkylpolyglucosid (APG^{®} 600, Hersteller: Henkel KGaA).

Zu den in fester Form vorliegenden Mitteln zählen z. B. Pulver, Kompaktate, wie Granulate und Formkörper (Tabletten). Die einzelnen Formen können nach aus dem Stand der Technik bekannten Verfahren hergestellt werden, wie durch Sprühtrocknung, Granulation und Verpressen.

Die erfindungsgemäß verwendeten Partikel können insbesondere in Kombination mit Tensiden eingesetzt werden, die vorzugsweise ausgewählt sind aus nichtionischen, anionischen, amphoteren und kationischen Tensiden sowie deren beliebigen Gemische.

Die Tenside liegen vorzugsweise in einer Menge von 0,1 bis 50 Gew.-%, vorzugsweise von 0,1 bis 35 Gew.-% und insbesondere von 0,1 bis 15 Gew.-%, bezogen auf die Zusammensetzung, vor.

Als nichtionische Tenside werden vorzugsweise alkoxylierte, vorteilhafterweise ethoxylierte, insbesondere primäre Alkohole mit vorzugsweise 8 bis 18 C-Atomen und durchschnittlich 1 bis 12 Mol Ethylenoxid (EO) pro Mol Alkohol eingesetzt, in denen der Alkoholrest linear oder bevorzugt in 2-Stellung methylverzweigt sein kann bzw. lineare und methylverzweigte Reste im Gemisch enthalten kann, so wie sie üblicherweise in Oxoalkoholresten vorliegen. Insbesondere sind jedoch Alkoholethoxylate mit linearen Resten aus Alkoholen nativen Ursprungs mit 12 bis 18 C-Atomen, z.B. aus Kokos-, Palm-, Talgfett- oder Oleylalkohol, und durchschnittlich 2 bis 8 EO pro Mol Alkohol bevorzugt. Zu den bevorzugten ethoxylierten Alkoholen gehören beispielsweise C₁₂₋₁₄-Alkohole mit 3 EO bis 7 EO, C₉₋₁₁-Alkohol mit 7 EO, C₁₃₋₁₅-Alkohole mit 3 EO, 5 EO, 7 EO oder 8 EO, C₁₂₋₁₈-Alkohole mit 3 EO, 5 EO oder 7 EO und Mischungen aus diesen, wie Mischungen aus C₁₂₋₁₄-Alkohol mit 3 EO und C₁₂₋₁₈-Alkohol mit 7 EO. Die angegebenen Ethoxylierungsgrade stellen statistische Mittelwerte dar, die für ein spezielles Produkt eine ganze oder eine gebrochene Zahl sein können. Bevorzugte Alkoholethoxylate weisen eine eingeengte Homologenverteilung auf (narrow range ethoxylates, NRE). Zusätzlich zu diesen nichtionischen Tensiden können auch Fettalkohole mit mehr als 12 EO eingesetzt werden. Beispiele hierfür sind Talgfettalkohol mit 14 EO, 25 EO, 30 EO oder 40 EO. Auch nichtionische Tenside, die EO- und PO-Gruppen zusammen im Molekül enthalten, sind erfindungsgemäß einsetzbar. Hierbei können Blockcopolymere mit EO-PO-Btockeinheiten bzw. PO-EO-Blockeinheiten eingesetzt werden, aber auch EO-PO-EO-Copolymere bzw. PO-EO-PO-Copolymere. Selbstverständlich sind auch gemischt alkoxylierte Niotenside einsetzbar, in denen EO- und PO-Einheiten nicht blockweise sondern statistisch verteilt sind. Solche Produkte sind durch gleichzeitige Einwirkung von Ethylen- und Propylenoxid auf Fettalkohole erhältlich.

Besonders bevorzugte Beispiele nichtinionische Tenside, die ein gutes Ablaufverhalten den Wasser auf harten Oberflächen bewirken sind die Fettalkoholpolyethylenglycolether, Fettalkoholpolyethylen/polypropylenglycolether und Mischether. die ggf. endgruppeverschlossen sein können.

Beispiele für Fettalkoholpolyethylenglycolether sind solche mit der Formel (I)

R¹O-(CH₂CH₂O)ₙ₁H (I)

in der R¹ für eine linearen oder verzweigten Alkyl- und/oder Alkenylrest mit 6 bis 22, vorzugsweise 12 bis 18 Kohlenstoffatomen und n1 für Zahlen von 1 bis 5 steht.

Die genannten Stoffe stellen bekannte Handelsprodukte dar. Typische Beispiele sind Anlagerungsprodukte von durchschnittlich 2 bzw. 4 Mol Ethylenoxid an technischen C_{12/14}-Kokosfettalkohol (Dehydol^{®} LS-2 bzw. LS-4, Fa. Henkel KGaA) oder Anlagerungsprodukte von durchschnittlich 4 Mol Ethylenoxid an C_{14/15}-Oxoalkohole (Dobanol^{®}45-4, Fa. Shell). Die Produkte können eine konventionelle oder auch eingeengte Homolgenverteilung aufweisen.

Unter Fettalkoholpolyethylen/polypropylenglycolethern sind nichtionische Tenside der Formel (II) zu verstehen,

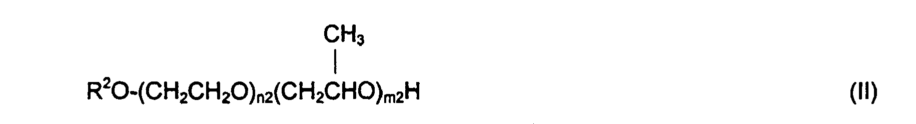

in der R² für einen linearen oder verzweigten Alkyl- und/oder Alkenylrest mit 6 bis 22, vorzugsweise 12 bis 18 Kohlenstoffatomen, n2 für Zahlen von 1 bis 0 und m2 für Zahlen von 1 bis 4 steht.

Auch diese Stoffe stellen bekannte Handelsprodukte dar. Typische Beispiele sind Anlagerungsprodukte von durchschnittlich 5 Mol Ethylenoxid und 4 Mol Propylenoxid an technischen C_{12/14}-Kokosfettalkohol (Dehydol^{®}LS-54, Fa. Henkel KGaA), oder 6,4 Mol Ethylenoxid und 1,2 Mol Propylenoxid an technischen C_{10/14}-Kokosfettalkohol (Dehydol^{®}LS-980, Fa. Henkel KGaA).

Unter Mischethern sind endgrupenverschlosssene Fettalkoholpolyglycolether mit der Formel (III) zu verstehen 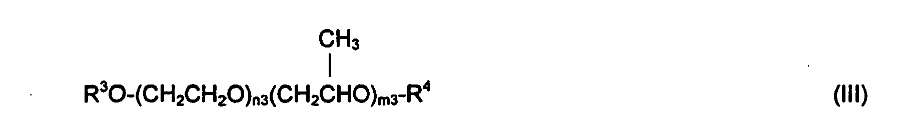 in der R³ für einen linearen oder verzweigten Alkyl- und/oder Alkenylrest mit 6 bis 22, vorzugsweise 12 bis 18 Kohlenstoffatomen, n3 für Zahlen von 1 bis 10, m2 für 0 oder Zahlen von 1 bis 4 und R⁴ für einen Alkylrest mit 1 bis 4 Kohlenstoffatomen oder einen Benzylrest steht.

Typische Beispiele sind Mischether der Formel (III), in der R³ für einen technischen C_{12/14}-Kokosalkylrest, n3 für 5 bzw. 10, m3 für 0 und R⁴ für eine Butylgruppe steht (Dehypon^{®}LS-54 bzw. LS-104, Fa. Henkel KGaA). Die Verwendung von butyl- bzw. benzylgruppenverschlossenen Mischethern ist aus anwendungstechnischen Gründen besonders bevorzugt.

Unter Hydroxyalkylpolyethylenglykolethern versteht man Verbindungen mit der allgemeinen Formel (IV) 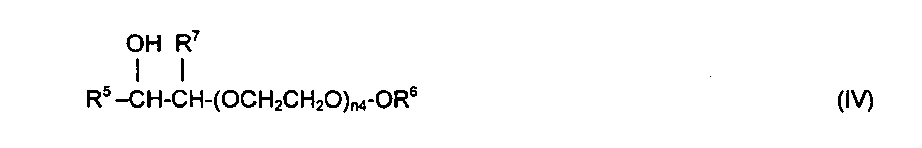 in der
- R⁵: für Wasserstoff oder einen geradkettigen Alkylrest mit 1 bis 16 C-Atomen,
- R⁶: für einen geradkettigen oder verzweigten Alkylrest mit 4 bis 8 C-Atomen,
- R⁷: für Wasserstoff oder einen Alkylrest mit 1 bis 16 C-Atomen und
- n4: für eine Zahl von 7 bis 30
stehen, mit der Maßgabe, daß die Gesamtzahl der in R⁵ und R⁷ enthaltenen C-Atome 6 bis 16 beträgt.

Außerdem können als weitere nichtionische Tenside auch Alkylglykoside der allgemeinen Formel RO(G)ₓ eingesetzt werden, in der R einen primären geradkettigen oder methylverzweigten, insbesondere in 2-Stellung methylverzweigten aliphatischen Rest mit 8 bis 22, vorzugsweise 12 bis 18 C-Atomen bedeutet und G das Symbol ist, das für eine Glykoseeinheit mit 5 oder 6 C-Atomen, vorzugsweise für Glucose, steht. Der Oligomerisierungsgrad x, der die Verteilung von Monoglykosiden und Oligoglykosiden angibt, ist eine beliebige Zahl zwischen 1 und 10; vorzugsweise liegt x bei 1,2 bis 1,4.

Eine weitere Klasse nichtionischer Tenside, die insbesondere in festen Mitteln eingesetzt werden, sind alkoxylierte, vorzugsweise ethoxylierte oder ethoxylierte und propoxylierte Fettsäurealkylester, vorzugsweise mit 1 bis 4 Kohlenstoffatomen in der Alkylkette.

Auch nichtionische Tenside vom Typ der Aminoxide, beispielsweise N-Kokosalkyl-N,N-dimethylaminoxid und N-Talgalkyl-N,N-dihydroxyethylaminoxid, und der Fettsäurealkanolamide können geeignet sein. Die Menge dieser nichtionischen Tenside beträgt vorzugsweise nicht mehr als die der ethoxylierten Fettalkohole, insbesondere nicht mehr als die Hälfte davon.

Weitere geeignete Tenside sind Polyhydroxyfettsäureamide der Formel (V), 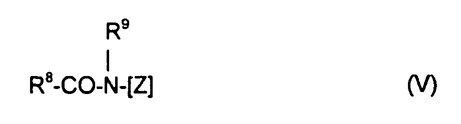 in der R⁸CO für einen aliphatischen Acylrest mit 6 bis 22 Kohlenstoffatomen, R⁹ für Wasserstoff, einen Alkyl- oder Hydroxyalkylrest mit 1 bis 4 Kohlenstoffatomen und [Z] für einen linearen oder verzweigten Polyhydroxyalkylrest mit 3 bis 10 Kohlenstoffatomen und 3 bis 10 Hydroxylgruppen steht. Bei den Polyhydroxyfettsäureamiden handelt es sich um bekannte Stoffe, die üblicherweise durch reduktive Aminierung eines reduzierenden Zuckers mit Ammoniak, einem Alkylamin oder einem Alkanolamin und nachfolgende Acylierung mit einer Fettsäure, einem Fettsäurealkylester oder einem Fettsäurechlorid erhalten werden können.

Zur Gruppe der Polyhydroxyfettsäureamide gehören auch Verbindungen der Formel (VI), 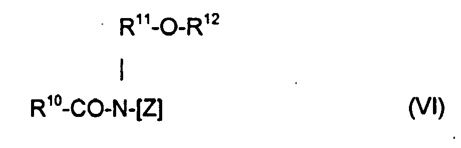 in der R¹⁰ für einen linearen oder verzweigten Alkyl- oder Alkenylrest mit 7 bis 12 Kohlenstoffatomen, R¹¹ für einen linearen, verzweigten oder cyclischen Alkylrest oder einen Arylrest mit 2 bis 8 Kohlenstoffatomen und R¹² für einen linearen, verzweigten oder cyclischen Alkylrest oder einen Arylrest oder einen Oxy-Alkylrest mit 1 bis 8 Kohlenstoffatomen steht, wobei C₁₋₄-Alkyl- oder Phenylreste bevorzugt sind und [Z] für einen linearen Polyhydroxyalkylrest steht, dessen Alkylkette mit mindestens zwei Hydroxylgruppen substituiert ist, oder alkoxylierte, vorzugsweise ethoxylierte oder propxylierte Derivate dieses Restes.

[Z] wird vorzugsweise durch reduktive Aminierung eines Zuckers erhalten, beispielsweise Glucose, Fructose, Maltose, Lactose, Galactose, Mannose oder Xylose. Die N-Alkoxy- oder N-Aryloxy-substituierten Verbindungen können dann beispielweise nach der Lehre der internationalen Anmeldung WO-A-95/07331 durch Umsetzung mit Fettsäuremethylestern in Gegenwart eines Alkoxids als Katalysator in die gewünschten Polyhydroxyfettsäureamide überführt werden.

Als anionische Tenside werden beispielsweise solche vom Typ der Sulfonate und Sulfate eingesetzt. Als Tenside vom Sulfonat-Typ kommen dabei vorzugsweise C₉₋₁₃-Alkylbenzolsulfonate, Olefinsulfonate, d.h. Gemische aus Alken- und Hydroxyalkansulfonaten sowie Disulfonaten, wie man sie beispielsweise aus C₁₂₋₁₈-Monoolefinen mit end- oder innenständiger Doppelbindung durch Sulfonieren mit gasförmigem Schwefeltrioxid und anschließende alkalische oder saure Hydrolyse der Sulfonierungsprodukte erhält, in Betracht. Geeignet sind auch Alkansulfonate, die aus C₁₂₋₁₈-Alkanen beispielsweise durch Sulfochlorierung oder Sulfoxidation mit anschließender Hydrolyse bzw. Neutralisation gewonnen werden. Ebenso sind auch die Ester von a-Sulfofettsäuren (Estersulfonate), z.B. die a-sulfonierten Methylester der hydrierten Kokos-, Palmkern- oder Talgfettsäuren geeignet.

Als Alk(en)ylsulfate werden die Alkali- und insbesondere die Natriumsalze der Schwefelsäurehalbester der C₁₂-C₁₈-Fettalkohole, beispielsweise aus Kokosfettalkohol, Talgfettalkohol, Lauryl-, Myristyl-, Cetyl- oder Stearylalkohol oder der C₁₀-C₂₀-Oxoalkohole und diejenigen Halbester sekundärer Alkohole dieser Kettenlängen bevorzugt. Weiterhin bevorzugt sind Alk(en)ylsulfate der genannten Kettenlänge, welche einen synthetischen, auf petrochemischer Basis hergestellten geradkettigen Alkylrest enthalten. Aus waschtechnischem Interesse sind die C₁₂-C₁₆-Alkylsulfate und C₁₂-C₁₅-Alkylsulfate sowie C₁₄-C₁₅-Alkylsulfate bevorzugt. Auch 2,3-Alkylsulfate, welche beispielsweise gemäß den US-Patentschriften 3,234,258 oder 5,075,041 hergestellt werden und als Handelsprodukte der Shell Oil Company unter dem namen DAN^{®} erhalten werden können, sind geeignete Aniontenside.

Weitere geeignete Aniontenside sind sulfierte Fettsäureglycerinester. Unter Fettsäureglycerinestern sind die Mono-, Di- und Triester sowie deren Gemische zu verstehen, wie sie bei der Herstellung durch Veresterung von einem Monoglycerin mit 1 bis 3 Mol Fettsäure oder bei der Umesterung von Triglyceriden mit 0,3 bis 2 Mol Glycerin erhalten werden. Bevorzugte sulfierte Fettsäureglycerinester sind dabei die Sulfierprodukte von gesättigten Fettsäuren mit 6 bis 22 Kohlenstoffatomen, beispielsweise der Capronsäure, Caprylsäure, Caprinsäure, Myristinsäure, Laurinsäure, Palmitinsäure, Stearinsäure oder Behensäure.

Auch die Schwefelsäuremonoester der mit 1 bis 6 Mol Ethylenoxid ethoxylierten geradkettigen oder verzweigten C₇₋₂₁-Alkohole, wie 2-Methyl-verzweigte C₉₋₁₁-Alkohole mit im Durchschnitt 3,5 Mol Ethylenoxid (EO) oder C₁₂₋₁₈-Fettalkohole mit 1 bis 4 EO, sind geeignet. Sie werden in Reinigungsmitteln aufgrund ihres hohen Schaumverhaltens nur in relativ geringen Mengen, beispielsweise in Mengen von 1 bis 5 Gew.-%, eingesetzt.

Weitere geeignete Aniontenside sind auch die Salze der Alkylsulfobemsteinsäure, die auch als Sulfosuccinate oder als Sulfobemsteinsäureester bezeichnet werden und die Monoester und/oder Diester der Sulfobernsteinsäure mit Alkoholen, vorzugsweise Fettalkoholen und insbesondere ethoxylierten Fettalkoholen darstellen. Bevorzugte Sulfosuccinate enthalten C₈₋₁₈-Fettalkoholreste oder Mischungen aus diesen. Insbesondere bevorzugte Sulfosuccinate enthalten einen Fettalkoholrest, der sich von ethoxylierten Fettalkoholen ableitet, die für sich betrachtet nichtionische Tenside darstellen (Beschreibung siehe unten). Dabei sind wiederum Sulfosuccinate, deren Fettalkohol-Reste sich von ethoxylierten Fettalkoholen mit eingeengter Homologenverteilung ableiten, besonders bevorzugt. Ebenso ist es auch möglich, Alk(en)ylbernsteinsäure mit vorzugsweise 8 bis 18 Kohlenstoffatomen in der Alk(en)ylkette oder deren Salze einzusetzen.

Als weitere anionische Tenside kommen insbesondere Seifen in Betracht, die insbesondere in pulverförmigen Mitteln und bei höheren pH-Werten eingesetzt werden. Geeignet sind gesättigte und ungesättigte Fettsäureseifen, wie die Salze der Laurinsäure, Myristinsäure, Palmitinsäure, Stearinsäure, hydrierte Erucasäure und Behensäure sowie insbesondere aus natürlichen Fettsäuren, z.B. Kokos-, Palmkem-, Olivenöl- oder Talgfettsäuren, abgeleitete Seifengemische.

Die anionischen Tenside einschließlich der Seifen können in Form ihrer Natrium-, Kalium- oder Ammoniumsalze sowie als lösliche Salze organischer Basen, wie Mono-, Di- oder Triethanolamin, vorliegen. Vorzugsweise liegen die anionischen Tenside in Form ihrer Natrium- oder Kaliumsalze, insbesondere in Form der Natriumsalze vor.

Als weitere Tenside kommen sogenannte Gemini-Tenside in Betracht. Hierunter werden im allgemeinen solche Verbindungen verstanden, die zwei hydrophile Gruppen und zwei hydrophobe Gruppen pro Molekül besitzen. Diese Gruppen sind in der Regel durch einen sogenannten "Spacer" voneinander getrennt. Dieser Spacer ist in der Regel eine Kohlenstoffkette, die lang genug sein sollte, daß die hydrophilen Gruppen einen ausreichenden Abstand haben, damit sie unabhängig voneinander agieren können. Derartige Tenside zeichnen sich im allgemeinen durch eine ungewöhnlich geringe kritische Micellkonzentration und die Fähigkeit, die Oberflächenspannung des Wassers stark zu reduzieren, aus. In Ausnahmefällen werden jedoch unter dem Ausdruck Gemini-Tenside nicht nur dimere, sondern auch trimere Tenside verstanden.

Geeignete Gemini-Tenside sind beispielsweise sulfatierte Hydroxymischether Dimeralkoholbis- und Trimeralkohol-tris-sulfate und -ethersulfate. Endgruppenverschlossene dimere und trimere Mischether zeichnen sich insbesondere durch ihre Bi- und Multifunktionalität aus. So besitzen die genannten endgruppenverschlossenen Tenside gute Netzeigenschaften und sind dabei schaumarm, so daß sie sich insbesondere für den Einsatz in maschinellen Wasch- oder Reinigungsverfahren eignen. Eingesetzt werden können aber auch Gemini-Polyhydroxyfettsäureamide oder Poly-Polyhydroxyfettsäureamide.

Beispiele für kationische Tenside sind quartäre Ammoniumverbindungen, kationische Polymere und Emulgatoren, wie sie in Haarpflegemitteln und auch in Mitteln zur Textilavivage eingesetzt werden.

Geeignete Beispiele sind quartäre Ammoniumverbindungen der Formeln (VII) und (VIII), 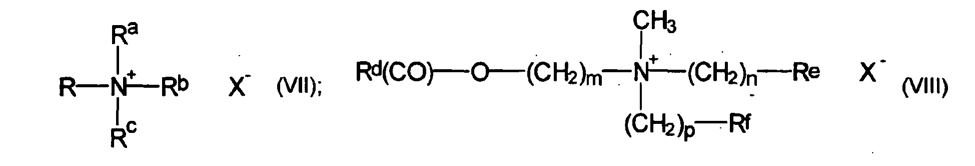 wobei in (VII) R und R^{a} für einen acyclischen Alkylrest mit 12 bis 24 Kohlenstoffatomen, R^{b} für einen gesättigten C₁-C₄ Alkyl- oder Hydroxyalkylrest steht, R^{c} entweder gleich R, R^{a} oder R^{b} ist oder für einen aromatischen Rest steht. X⁻ steht entweder für ein Halogenid-, Methosulfat-, Methophosphat- oder Phosphation sowie Mischungen aus diesen. Beispiele für kationische Verbindungen der Formel (VII) sind Didecyldimethylammoniumchlorid, Ditalgdimethylammoniumchlorid oder Dihexadecylammoniumchlorid.

Verbindungen der Formel (VIII) sind sogenannte Esterquats. Esterquats zeichnen sich durch eine hervorragende biologische Abbaubarkeit aus. Hierbei steht R^{d} für einen aliphatischen Acylrest mit 12 bis 22 Kohlenstoffatomen mit 0, 1, 2 oder 3 Doppelbindungen; R^{e} steht für H, OH oder O(CO)R^{f}, R^{g} steht unabhängig von R^{f} für H, OH oder O(CO)R^{h}, wobei R^{g} und R^{h} unabhängig voneinander jeweils für einen aliphatischen Acylrest mit 12 bis 22 Kohlenstoffatomen mit 0, 1, 2 oder 3 Doppelbindungen steht. m, n und p können jeweils unabhängig voneinander den Wert 1, 2 oder 3 haben. X⁻ kann entweder ein Halogenid-, Methosulfat-, Methophosphat- oder Phosphation sowie Mischungen aus diesen sein. Bevorzugt sind Verbindungen, die für R^{d} die Gruppe O(CO)R^{g} und für R^{d} und R^{g} Alkylreste mit 16 bis 18 Kohlenstoffatomen enthalten. Besonders bevorzugt sind Verbindungen, bei denen R^{f} zudem für OH steht. Beispiele für Verbindungen der Formel (VIII) sind Methyl-N-(2-hydroxyethyl)-N,N-di(talgacyl-oxyethyl)ammonium-methosulfat, Bis-(palmitoyl)-ethyl-hydroxyethyl-methylammonium-methosulfat oder Methyl-N,N-bis(acyloxyethyl)-N-(2-hydroxyethyl)ammoniummethosulfat. Werden quarternierte Verbindungen der Formel (VIII) eingesetzt, die ungesättigte Alkylketten aufweisen, sind die Acylgruppen bevorzugt, deren korrespondierenden Fettsäuren eine Jodzahl zwischen 5 und 80, vorzugsweise zwischen 10 und 60 und insbesondere zwischen 15 und 45 aufweisen und die ein cis/trans-Isomerenverhältnis (in Gew.-%) von größer als 30 : 70, vorzugsweise größer als 50 : 50 und insbesondere größer als 70 : 30 haben. Handelsübliche Beispiele sind die von Stepan unter dem Warenzeichen Stepantex^{®} vertriebenen Methylhydroxyalkyldialkoyloxyalkylammoniummethosulfate oder die unter Dehyquart^{®} bekannten Produkte von Cognis bzw. die unter Rewoquat^{®} bekannten Produkte von Goldschmidt-Witco. Weitere bevorzugte Verbindungen sind die Diesterquats der Formel (IX), die unter dem Namen Rewoquat® W 222 LM bzw. CR 3099 erhältlich sind und neben der Weichheit auch für Stabilität und Farbschutz sorgen. 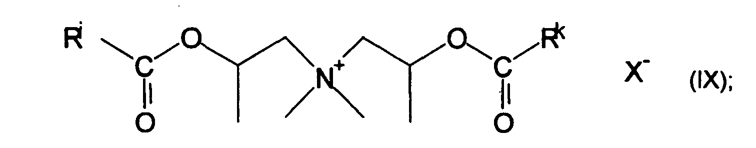 R^{l} und R^{k} stehen dabei unabhängig voneinander jeweils für einen aliphatischen Acylrest mit 12 bis 22 Kohlenstoffatomen mit 0, 1, 2 oder 3 Doppelbindungen.

Neben den oben beschriebenen quartären Verbindungen können auch andere bekannte Verbindungen eingesetzt werden, wie beispielsweise quartäre Imidazoliniumverbindungen der Formel (X), 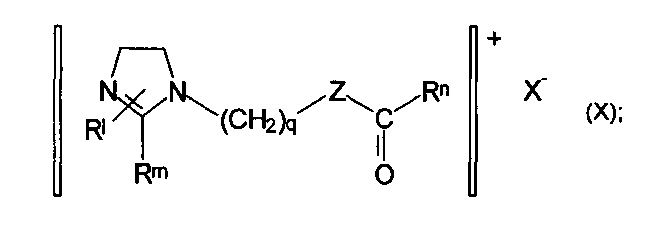 wobei R^{l} für H oder einen gesättigten Alkylrest mit 1 bis 4 Kohlenstoffatomen, R^{m} und Rⁿ unabhängig voneinander jeweils für einen aliphatischen, gesättigten oder ungesättigten Alkylrest mit 12 bis 18 Kohlenstoffatomen, R^{m} alternativ auch für O(CO)R^{o} stehen kann, wobei R^{o} einen aliphatischen, gesättigten oder ungesättigten Alkylrest mit 12 bis 18 Kohlenstoffatomen bedeutet, und Z eine NH-Gruppe oder Sauerstoff bedeutet und X⁻ ein Anion ist. q kann ganzzahlige Werte zwischen 1 und 4 annehmen.
Weitere geeignete quartäre Verbindungen sind durch Formel (XI) beschrieben, 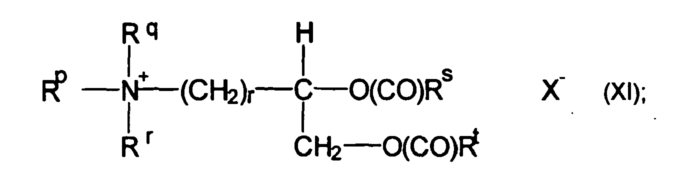 wobei R^{p}, R^{q} und R^{r} unabhängig voneinander für eine C₁₋₄-Alkyl-, Alkenyl- oder Hydroxyalkylgruppe steht, R^{s} und R^{t} jeweils unabhängig ausgewählt eine C₈₋₂₈-Alkylgruppe darstellt und r eine Zahl zwischen 0 und 5 ist.

Neben den Verbindungen der Formeln (VII) und (VIII) können auch kurzkettige, wasserlösliche, quartäre Ammoniumverbindungen eingesetzt werden, wie Trihydroxyethylmethylammonium-methosulfat oder die Alkyltrimethylammoniumchloride, Dialkyldimethylammoniumchloride und Trialkylmethylammoniumchloride, z. B. Cetyltrimethylammoniumchlorid, Stearyltrimethylammoniumchlorid, Distearyldimethylammoniumchlorid, Lauryldimethylammoniumchlorid, Lauryldimethylbenzylammoniumchlorid und Tricetylmethylammoniumchlorid.

Auch protonierte Alkylaminverbindungen, die weichmachende Wirkung aufweisen, sowie die nicht quaternierten, protonierten Vorstufen der kationischen Emulgatoren sind geeignet.

Weitere erfindungsgemäß verwendbare kationische Verbindungen stellen die quaternisierten Proteinhydrolysate dar.

Zu den geeigneten kationischen Polymeren zählen die Polyquatemium-Polymere, wie sie im CTFA Cosmetic Ingredient Dictionary (The Cosmetic, Toiletry und Fragrance, Inc., 1997), insbesondere die auch als Merquats bezeichneten Polyquaternium-6-, Polyquaternium-7-, Polyquatemium-10-Polymere (Ucare Polymer IR 400; Amerchol), Polyquatemium-4-Copolymere, wie Pfropfcopolymere mit einen Cellulosegerüst und quartären Ammoniumgruppen, die über Allyldimethylammoniumchlorid gebunden sind, kationische Cellulosederivate, wie kationisches Guar, wie Guar-hydroxypropyltriammoniumchlorid, und ähnliche quatemierte Guar-Derivate (z. B. Cosmedia Guar, Hersteller: Cognis GmbH), kationische quartäre Zuckerderivate (kationische . Alkylpolyglucoside), z. B. das Handelsprodukt Glucquat^{®}100, gemäß CTFA-Nomenklatur ein "Lauryl Methyl Gluceth-10 Hydroxypropyl Dimonium Chloride", Copolymere von PVP und Dimethylaminomethacrylat, Copolymere von Vinylimidazol und Vinylpyrrolidon, Aminosilicon-polymere und Copolymere,

Ebenfalls einsetzbar sind polyquaternierte Polymere (z. B. Luviquat Care von BASF) und auch kationische Biopolymere auf Chitinbasis und deren Derivate, beispielsweise das unter der Handelsbezeichnung Chitosan^{®} (Hersteller: Cognis) erhältliche Polymer. Erfindungsgemäß ebenfalls geeignet sind kationische Silikonöle wie beispielsweise die im Handel erhältlichen Produkte Q2-7224 (Hersteller: Dow Corning; ein stabilisiertes Trimethylsilylamodimethicon), Dow Corning 929 Emulsion (enthaltend ein hydroxyl-amino-modifiziertes Silicon, das auch als Amodimethicone bezeichnet wird), SM-2059 (Hersteller: General Electric), SLM-55067 (Hersteller: Wacker) Abil^{®}-Quat 3270 und 3272 (Hersteller: Goldschmidt-Rewo; diquartare Polydimethylsiloxane, Quaternium-80), sowie Siliconquat Rewoquat^{®} SQ 1 (Tegopren^{®} 6922, Hersteller: Goldschmidt-Rewo).

Ebenfalls einsetzbar sind Verbindungen der Formel (XII), 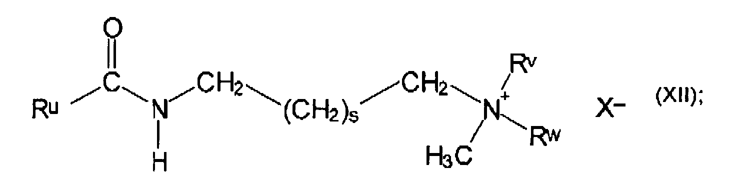 die Alkylamidoamine in ihrer nicht quaternierten oder, wie dargestellt, ihrer quaternierten Form, sein können. R^{u} kann ein aliphatischer Acylrest mit 12 bis 22 Kohlenstoffatomen mit 0, 1, 2 oder 3 Doppelbindungen sein. s kann Werte zwischen 0 und 5 annehmen. R^{v} und R^{w} stehen unabhängig voneinander jeweils für H, C₁₋₄-Alkyl oder Hydroxyalkyl. Bevorzugte Verbindungen sind Fettsäureamidoamine wie das unter der Bezeichnung Tego Amid^{®}S 18 erhältliche Stearylamidopropyldimethylamin oder das unter der Bezeichnung Stepantex^{®} X 9124 erhältliche 3-Talgamidopropyl-trimethylammonium-methosulfat, die sich neben einer guten konditionierenden Wirkung auch durch farbübertragungsinhibierende Wirkung sowie speziell durch ihre gute biologische Abbaubarkeit auszeichnen.

Die erfindungsgemäß verwendeten Partikel werden vorzugsweise in Mittel zur Textilausrüstung, Textilwaschmittel, Textilvorbehandlungs- oder-nachbehandlungsmittel eingearbeitet.

Die Mittel können neben den erfindungsgemäß eingesetzten Partikeln auch die oben beschriebenen Tenside sowie weitere Komponenten enthalten, wie sie üblicherweise in Wasch- und Reinigungsmitteln eingesetzt werden.

Als weitere Komponenten kommen z. B. Gerüststoffe in Betracht, insbesondere Zeolithe, Silikate, Carbonate, organische Cobuilder und - wo keine ökologischen Vorurteile gegen ihren Einsatz bestehen- auch die Phosphate.

Geeignete kristalline, schichtförmige Natriumsilikate besitzen die allgemeine Formel NaMSiₓO₂ₓ₊₁·H₂O, wobei M Natrium oder Wasserstoff bedeutet, x eine Zahl von 1,9 bis 4 und y eine Zahl von 0 bis 20 ist und bevorzugte Werte für x 2, 3 oder 4 sind. Bevorzugte kristalline Schichtsilikate der angegebenen Formel sind solche, in denen M für Natrium steht und x die Werte 2 oder 3 annimmt. Insbesondere sind sowohl β- als auch δ-Natriumdisilikate Na₂Si₂O₅ ·yH₂O bevorzugt.

Einsetzbar sind auch amorphe Natriumsilikate mit einem Modul Na₂O : SiO₂ von 1:2 bis 1:3,3, vorzugsweise von 1:2 bis 1:2,8 und insbesondere von 1:2 bis 1:2,6, welche löseverzögert sind und Sekundärwascheigenschaften aufweisen. Die Löseverzögerung gegenüber herkömmlichen amorphen Natriumsilikaten kann dabei auf verschiedene Weise, beispielsweise durch Oberflächenbehandlung, Compoundierung, Kompaktierung/Verdichtung oder durch Übertrocknung hervorgerufen worden sein. Im Rahmen dieser Erfindung wird unter dem Begriff "amorph" auch "röntgenamorph" verstanden. Dies heißt, daß die Silikate bei Röntgenbeugungsexperimenten keine scharfen Röntgenreflexe liefern, wie sie für kristalline Substanzen typisch sind, sondern allenfalls ein oder mehrere Maxima der gestreuten Röntgenstrahlung, die eine Breite von mehreren Gradeinheiten des Beugungswinkels aufweisen. Es kann jedoch sehr wohl sogar zu besonders guten Buildereigenschaften führen, wenn die Silikatpartikel bei Elektronenbeugungsexperimenten verwaschene oder sogar scharfe Beugungsmaxima liefern. Dies ist so zu interpretieren, daß die Produkte mikrokristalline Bereiche der Größe 10 bis einige Hundert nm aufweisen, wobei Werte bis max. 50 nm und insbesondere bis max. 20 nm bevorzugt sind. Insbesondere bevorzugt sind verdichtete/kompaktierte amorphe Silikate, compoundierte amorphe Silikate und übertrocknete röntgenamorphe Silikate.

Der eingesetzte feinkristalline, synthetische und gebundenes Wasser enthaltende Zeolith ist vorzugsweise Zeolith A und/oder P. Als Zeolith P wird Zeolith MAP^{®} (Handelsprodukt der Firma Crosfield) besonders bevorzugt. Geeignet sind jedoch auch Zeolith X sowie Mischungen aus A, X und/oder P.

Als weitere bevorzugt eingesetzte und besonders geeignete Zeolithe sind Zeolithe vom Faujasit-Typ zu nennen. Zusammen mit den Zeolithen X und Y gehört das Mineral Faujasit zu den Faujasit-Typen innerhalb der Zeolith-Strukturgruppe 4, die durch die Doppelsechsring-Untereinheit D6R gekennzeichnet ist (Vergleiche Donald W. Breck: "Zeolite Molecular Sieves", John Wiley & Sons, New York, London, Sydney, Toronto, 1974, Seite 92). Zur Zeolith-Strukturgruppe 4 zählen neben den genannten Faujasit-Typen noch die Mineralien Chabazit und Gmelinit sowie die synthetischen Zeolithe R (Chabazit-Typ), S (Gmelinit-Typ), L und ZK-5. Die beiden letztgenannten synthetischen Zeolithe haben keine mineralischen Analoga.

Zeolithe vom Faujasit-Typ sind aus β-Käfigen aufgebaut, die tetrahedral über D6R-Untereinheiten verknüpft sind, wobei die β-Käfige ähnlich den Kohlenstoffatomen im Diamanten angeordnet sind. Das dreidimensionale Netzwerk dieser Zeolithe vom Faujasit-Typ weist Poren von 2,2 und 7,4 Å auf, die Elementarzelle enthält darüberhinaus 8 Kavitäten mit ca. 13 Å Durchmesser und läßt sich durch die Formel Na₈₆[(AlO₂)₈₆(SiO₂)₁₀₆] · 264 H₂O beschreiben. Das Netzwerk des Zeolith X enthält dabei ein Hohlraumvolumen von ungefähr 50%, bezogen auf den dehydratisierten Kristall, was den größten Leerraum aller bekannten Zeolithe darstellt (Zeolith Y: ca. 48% Hohlraumvolumen, Faujasit: ca. 47% Hohlraumvolumen). (Alle Daten aus: Donald W. Breck: "Zeolite Molecular Sieves", John Wiley & Sons, New York, London, Sydney, Toronto, 1974, Seiten 145, 176, 177).

Im Rahmen der vorliegenden Erfindung kennzeichnet der Begriff "Zeolith vom Faujasit-Typ" alle drei Zeolithe, die die Faujasit-Untergruppe der Zeolith-Strukturgruppe 4 bilden. Neben dem Zeolith X sind auch Zeolith Y und Faujasit sowie Mischungen dieser Verbindungen einsetzbar, wobei der reine Zeolith X bevorzugt ist.

Auch Mischungen oder Cokristallisate von Zeolithen des Faujasit-Typs mit anderen Zeolithen, die nicht zwingend der Zeolith-Strukturgruppe 4 angehören müssen, können eingesetzt werden.

Aluminiumsilikate, die ebenfalls eingesetzt werden können, sind kommerziell erhältlich, und die Methoden zu ihrer Darstellung sind in Standardmonographien beschrieben.

Beispiele für kommerziell erhältliche Zeolithe vom X-Typ können durch die folgenden Formeln beschrieben werden:

Na₈₆[(AlO₂)₈₆(SiO₂)₁₀₆] · x H₂O,

K₈₆[(AlO₂)₈₆(SiO₂)₁₀₆] · x H₂O,

Ca₄₀Na₆[(AlO₂)₈₆(SiO₂)₁₀₆] · x H₂O,

Sr₂₁Ba₂₂[(AlO₂)₈₆(SiO₂)₁₀₆] · x H₂O,

in denen x Werte zwischen 0 und 276 annehmen kann und die Porengrößen von 8,0 bis 8,4 Å aufweisen.

Kommerziell erhältlich und im Rahmen der vorliegenden Erfindung bevorzugt einsetzbar ist beispielsweise auch ein Co-Kristallisat aus Zeolith X und Zeolith A (ca. 80 Gew.-% Zeolith X), das von der Firma CONDEA Augusta S.p.A. unter dem Markennamen VEGOBOND AX^{®} vertrieben wird und durch die Formel

nNa₂O · (1-n)K₂O · Al₂O₃ · (2 - 2,5)SiO₂ · (3,5 - 5,5) H₂O

beschrieben werden kann. Der Zeolith kann dabei sowohl als Gerüststoff in einem granularen Compound eingesetzt, als auch zu einer Art "Abpuderung" der gesamten zu verpressenden Mischung verwendet werden, wobei üblicherweise beide Wege zur Inkorporation des Zeoliths in das Vorgemisch genutzt werden. Geeignete Zeolithe weisen eine mittlere Teilchengröße von weniger als 10 µm (Volumenverteilung; Meßmethode: Coulter Counter) auf und enthalten vorzugsweise 18 bis 22 Gew.-%, insbesondere 20 bis 22 Gew.-% an gebundenem Wasser.

Selbstverständlich ist auch ein Einsatz der allgemein bekannten Phosphate als Buildersubstanzen möglich, sofern ein derartiger Einsatz nicht aus ökologischen Gründen vermieden werden sollte. Unter der Vielzahl der kommerziell erhältlichen Phosphate haben die Alkalimetallphosphate, -hydrogen- und dihgydrogenphosphate unter besonderer Bevorzugung von Pentanatrium- bzw. Pentakaliumtriphosphat (Natrium- bzw. Kaliumtripolyphosphat) in der Wasch- und Reinigungsmittel-Industrie die größte Bedeutung.

Alkalimetallphosphate ist dabei die summarische Bezeichnung für die Alkalimetall- (insbesondere Natrium- und Kalium-) -Salze der verschiedenen Phosphorsäuren, bei denen man Metaphosphorsäuren (HPO₃)ₙ und Orthophosphorsäure H₃PO₄ neben höhermolekularen Vertretern unterscheiden kann. Die Phosphate vereinen dabei mehrere Vorteile in sich: Sie wirken als Alkaliträger, verhindern Kalkbeläge auf Maschinenteilen bzw. Kalkinkrustationen in Geweben und tragen überdies zur Reinigungsleistung bei.

Als organische Cobuilder können insbesondere Polycarboxylate / Polycarbonsäuren, polymere Polycarboxylate, Asparaginsäure, Polyacetale, Dextrine, weitere organische Cobuilder (siehe unten) sowie Phosphonate eingesetzt werden. Diese Stoffklassen werden nachfolgend beschrieben.

Brauchbare organische Gerüstsubstanzen sind beispielsweise die in Form ihrer Natriumsalze einsetzbaren Polycarbonsäuren, wobei unter Polycarbonsäuren solche Carbonsäuren verstanden werden, die mehr als eine Säurefunktion tragen. Beispielsweise sind dies Citronensäure, Adipinsäure, Bernsteinsäure, Glutarsäure, Äpfelsäure, Weinsäure, Maleinsäure, Fumarsäure, Zuckersäuren, Aminocarbonsäuren, Nitrilotriessigsäure (NTA), sofern ein derartiger Einsatz aus ökologischen Gründen nicht zu beanstanden ist, sowie Mischungen aus diesen. Bevorzugte Salze sind die Salze der Polycarbonsäuren wie Citronensäure, Adipinsäure, Bernsteinsäure, Glutarsäure, Weinsäure, Zuckersäuren und Mischungen aus diesen.

Auch die Säuren an sich können eingesetzt werden. Die Säuren besitzen neben ihrer Builderwirkung typischerweise auch die Eigenschaft einer Säuerungskomponente und dienen somit auch zur Einstellung eines niedrigeren und milderen pH-Wertes von Wasch- oder Reinigungsmitteln. Insbesondere sind hierbei Citronensäure, Bernsteinsäure, Glutarsäure, Adipinsäure, Gluconsäure und beliebige Mischungen aus diesen zu nennen.

Als Builder sind weiter polymere Polycarboxylate geeignet, dies sind beispielsweise die Alkalimetallsalze der Polyacrylsäure oder der Polymethacrylsäure, beispielsweise solche mit einer relativen Molekülmasse von 500 bis 70000 g/mol.

Bei den für polymere Polycarboxylate angegebenen Molmassen handelt es sich im Sinne dieser Schrift um gewichtsmittlere Molmassen M_{w} der jeweiligen Säureform, die grundsätzlich mittels Gelpermeationschromatographie (GPC) bestimmt wurden, wobei ein UV-Detektor eingesetzt wurde. Die Messung erfolgte dabei gegen einen externen Polyacrylsäure-Standard, der aufgrund seiner strukturellen Verwandtschaft mit den untersuchten Polymeren realistische Molgewichtswerte liefert. Diese Angaben weichen deutlich von den Molgewichtsangaben ab, bei denen Polystyrolsulfonsäuren als Standard eingesetzt werden. Die gegen Polystyrolsulfonsäuren gemessenen Molmassen sind in der Regel deutlich höher als die in dieser Schrift angegebenen Molmassen.

Geeignete Polymere sind insbesondere Polyacrylate, die bevorzugt eine Molekülmasse von 2000 bis 20000 g/mol aufweisen. Aufgrund ihrer überlegenen Löslichkeit können aus dieser Gruppe wiederum die kurzkettigen Polyacrylate, die Molmassen von 2000 bis 10000 g/mol, und besonders bevorzugt von 3000 bis 5000 g/mol, aufweisen, bevorzugt sein.

Geeignet sind weiterhin copolymere Polycarboxylate, insbesondere solche der Acrylsäure mit Methacrylsäure und der Acrylsäure oder Methacrylsäure mit Maleinsäure. Als besonders geeignet haben sich Copolymere der Acrylsäure mit Maleinsäure erwiesen, die 50 bis 90 Gew.-% Acrylsäure und 50 bis 10 Gew.-% Maleinsäure enthalten. Ihre relative Molekülmasse, bezogen auf freie Säuren, beträgt im allgemeinen 2000 bis 70000 g/mol, vorzugsweise 20000 bis 50000 g/mol und insbesondere 30000 bis 40000 g/mol.

Die (co-)polymeren Polycarboxylate können entweder als Pulver oder als wäßrige Lösung eingesetzt werden. Der Gehalt der Mittel an (co-)polymeren Polycarboxylaten beträgt vorzugsweise 0,5 bis 20 Gew.-%, insbesondere 3 bis 10 Gew.-%.

Zur Verbesserung der Wasserlöslichkeit können die Polymere auch Allylsulfonsäuren, wie beispielsweise Allyloxybenzolsulfonsäure und Methallylsulfonsäure, als Monomer enthalten.

Insbesondere bevorzugt sind auch biologisch abbaubare Polymere aus mehr als zwei verschiedenen Monomereinheiten, beispielsweise solche, die als Monomere Salze der Acrylsäure und der Maleinsäure sowie Vinylalkohol bzw. Vinylalkohol-Derivate oder die als Monomere Salze der Acrylsäure und der 2-Alkylallylsulfonsäure sowie Zucker-Derivate enthalten.

Weitere bevorzugte Copolymere sind solche, die als Monomere vorzugsweise Acrolein und Acrylsäure/Acrylsäuresalze bzw. Acrolein und Vinylacetat aufweisen.

Ebenso sind als weitere bevorzugte Buildersubstanzen polymere Aminodicarbonsäuren, deren Salze oder deren Vorläufersubstanzen zu nennen. Besonders bevorzugt sind Polyasparaginsäuren bzw. deren Salze und Derivate.

Weitere geeignete Buildersubstanzen sind Polyacetale, welche durch Umsetzung von Dialdehyden mit Polyolcarbonsäuren, welche 5 bis 7 C-Atome und mindestens 3 Hydroxylgruppen aufweisen, erhalten werden können. Bevorzugte Polyacetale werden aus Dialdehyden wie Glyoxal, Glutaraldehyd, Terephthalaldehyd sowie deren Gemischen und aus Polyolcarbonsäuren wie Gluconsäure und/oder Glucoheptonsäure erhalten.

Weitere geeignete organische Buildersubstanzen sind Dextrine, beispielsweise Oligomere bzw. Polymere von Kohlenhydraten, die durch partielle Hydrolyse von Stärken erhalten werden können. Die Hydrolyse kann nach üblichen, beispielsweise säure- oder enzymkatalysierten Verfahren durchgeführt werden. Vorzugsweise handelt es sich um Hydrolyseprodukte mit mittleren Molmassen im Bereich von 400 bis 500000 g/mol. Dabei ist ein Polysaccharid mit einem Dextrose-Äquivalent (DE) im Bereich von 0,5 bis 40, insbesondere von 2 bis 30 bevorzugt, wobei DE ein gebräuchliches Maß für die reduzierende Wirkung eines Polysaccharids im Vergleich zu Dextrose, welche ein DE von 100 besitzt, ist. Brauchbar sind sowohl Maltodextrine mit einem DE zwischen 3 und 20 und Trockenglucosesirupe mit einem DE zwischen 20 und 37 als auch sogenannte Gelbdextrine und Weißdextrine mit höheren Molmassen im Bereich von 2000 bis 30000 g/mol.

Bei den oxidierten Derivaten derartiger Dextrine handelt es sich um deren Umsetzungsprodukte mit Oxidationsmitteln, welche in der Lage sind, mindestens eine Alkoholfunktion des Saccharidrings zur Carbonsäurefunktion zu oxidieren. Ein an C₆ des Saccharidrings oxidiertes Produkt kann besonders vorteilhaft sein.

Auch Oxydisuccinate und andere Derivate von Disuccinaten, vorzugsweise Ethylendiamindisuccinat, sind weitere geeignete Cobuilder. Dabei wird Ethylendiamin-N,N'-disuccinat (EDDS) bevorzugt in Form seiner Natrium- oder Magnesiumsalze verwendet. Weiterhin bevorzugt sind in diesem Zusammenhang auch Glycerindisuccinate und Glycerintrisuccinate. Geeignete Einsatzmengen liegen in zeolithhaltigen und/oder silicathaltigen Formulierungen bei 3 bis 15 Gew.%.

Weitere brauchbare organische Cobuilder sind beispielsweise acetylierte Hydroxycarbonsäuren bzw. deren Salze, welche gegebenenfalls auch in Lactonform vorliegen können und welche mindestens 4 Kohlenstoffatome und mindestens eine Hydroxygruppe sowie maximal zwei Säuregruppen enthalten.

Eine weitere Substanzklasse mit Cobuildereigenschaften stellen die Phosphonate dar. Diese Verbindungen wurden bereits als geeignete Substanzen zur Modifizierung der Partikeloberflächen beschrieben. Sie können auch unmittelbar als Einzelsubstanzen eingesetzt werden.

Darüber hinaus können alle Verbindungen, die in der Lage sind, Komplexe mit Erdalkaliionen auszubilden, als Cobuilder eingesetzt werden.

Weiterhin können die hergestellten Mittel alle üblicherweise in Wasch- und Reinigungsmitteln enthaltenen Substanzen aufweisen, wie Enzyme, Bleichmittel, Bleichaktivatoren, omplexbildner, Vergrauungsinhibitoren, Schauminhibitoren, anorganische Salze, Lösungsmittel, pH-Stellmittel, Duftstoffe, Parfümträger, Fluoreszenzmittel, Farbstoffe, Hydrotope, Silikonöle, weitere Soil-release-Verbindungen, optische Aufheller, Vergrauungsinhibitoren, Einlaufverhinderer, Knitterschutzmittel, Farbübertragungsinhibitoren, antimikrobielle Wirkstoffe, Germizide, Fungizide, Antioxidantien, Korrosionsinhibitoren, Antistatika, Bügelhilfsmittel, Phobier- und Imprägniermittel, Quell- und Schiebefestmittel, UV-Absorber oder deren Gemische.

Als in den Mitteln verwendbare Enzyme kommen solche aus der Klasse der Oxidasen, Proteasen, Lipasen, Cutinasen, Amylasen, Pullulanasen, Cellulasen, Hemicellulasen, Xylanasen und Peroxidasen sowie deren Gemische in Frage, beispielsweise Proteasen wie BLAP®, Optimase®, Opticiean®, Maxacal®, Maxapem®, Alcalase®, Esperase® und/oder Savinase®, Amylasen wie Termamyl®, Amylase-LT®, Maxamyl®, Duramyl® und/oder Purafect® OxAm, Lipasen wie Lipolase®, Lipomax®, Lumafast® und/oder Lipozym®, Cellulasen wie Celluzyme® und oder Carezame®. Besonders geeignet sind aus Pilzen oder Bakterien, wie Bacillus subtilis, Bacillus licheniformis, Streptomyces griseus, Humicola lanuginosa, Humicola insolens, Pseudomonas pseudoalcaligenes oder Pseudomonas cepacia gewonnene enzymatische Wirkstoffe. Die gegebenenfalls verwendeten Enzyme können, wie zum Beispiel in der europäischen Patentschrift EP 0 564 476 oder in der internationalen Patentanmeldungen WO 94/23005 beschrieben, an Trägerstoffen adsorbiert und/oder in Hüllsubstanzen eingebettet sein, um sie gegen vorzeitige Inaktivierung zu schützen. Sie sind in den erfindungsgemäßen Mitteln vorzugsweise in Mengen bis zu 10 Gew.-%, insbesondere von 0,2 Gew.-% bis 2 Gew.-%, enthalten, wobei besonders bevorzugt gegen oxidativen Abbau stabilisierte Enzyme.

Unter den als Bleichmittel dienenden, in Wasser H₂O₂ liefernden Verbindungen haben das Natriumperborattetrahydrat, Natriumperboratmonohydrat und das Natriumpercarbonat besondere Bedeutung. Weitere brauchbare Bleichmittel sind beispielsweise Persulfate und Mischsalze mit Persulfaten, wie die unter der Handeltsbezeichnung CAROAT^{®} erhältlichen Salze, Peroxypyrophosphate, Citratperhydrate sowie H₂O₂ liefernde persaure Salze oder Persäuren, wie Perbenzoate, Peroxophthalate, Diperazelainsäure, Diperdodecandisäure oder Phthaloiminopersäuren wie Phthaliminopercapronsäure. Vorzugsweise werden organische Persäuren, Alkaliperborate und/oder Alkalipercarbonate, in Mengen von 0,1 bis 40 Gew.%, vorzugsweise 3 bis 30 Gew.%, insbesondere 5 bis 25 Gew.-% eingesetzt.

Um beim Waschen bei Temperaturen von 60 °C und darunter, und insbesondere bei der Wäschevorbehandlung eine verbesserte Bleichwirkung zu erreichen, können Bleichaktivatoren eingearbeitet werden. Als Bleichaktivatoren können Verbindungen, die unter Perhydrolysebedingungen aliphatische Peroxocarbonsäuren mit vorzugsweise 1 bis 10 C-Atomen, insbesondere 2 bis 4 C-Atomen, und/oder gegebenenfalls substituierte Perbenzoesäure ergeben, eingesetzt werden. Geeignet sind Substanzen, die O- und/oder N-Acylgruppen der genannten C-Atomzahl und/oder gegebenenfalls substituierte Benzoylgruppen tragen. Bevorzugt sind mehrfach acylierte Alkylendiamine, insbesondere Tetraacetylethylendiamin (TAED), acylierte Triazinderivate, insbesondere 1,5-Diacetyl-2,4-dioxohexahydro-1,3,5-triazin (DADHT), acylierte Glycolurile, insbesondere 1,3,4,6-Tetraacetylglycoluril (TAGU), N-Acylimide, insbesondere N-Nonanoylsuccinimid (NOSI), acylierte Phenolsulfonate, insbesondere n-Nonanoyl- oder Isononanoyloxybenzolsulfonat (*n*- bzw. iso-NOBS), acylierte Hydroxycarbonsäuren, wie Triethyl-O-acetylcitrat (TEOC), Carbonsäureanhydride, insbesondere Phthalsäureanhydrid, Isatosäureanhydrid und/oder Bernsteinsäureanhydrid, Carbonsäureamide, wie N-Methyldiacetamid, Glycolid, acylierte mehrwertige Alkohole, insbesondere Triacetin, Ethylenglycoldiacetat, Isopropenylacetat, 2,5-Diacetoxy-2,5-dihydrofuran und die aus den deutschen Patentanmeldungen DE 196 16 693 und DE 196 16 767 bekannten Enolester sowie acetyliertes Sorbitol und Mannitol beziehungsweise deren in der europäischen Patentanmeldung EP 0 525 239 beschriebene Mischungen (SORMAN), acylierte Zuckerderivate, insbesondere Pentaacetylglucose (PAG), Pentaacetylfructose, Tetraacetylxylose und Octaacetyllactose sowie acetyliertes, gegebenenfalls N-alkyliertes Glucamin bzw. Gluconolacton, Triazol bzw. Triazolderivate und/oder teilchenförmige Caprolactame und/oder Caprolactamderivate, bevorzugt N-acylierte Lactame, beispielsweise N-Benzoylcaprolactam und N-Acetylcaprolactam, die aus den internationalen Patentanmeldungen WO-A-94/27970, WO-A-94/28102, WO-A-94/28103, WO-A-95/00626, WO-A-95/14759 und WO-A-95/17498 bekannt sind. Die aus der deutschen Patentanmeldung DE-A-196 16 769 bekannten hydrophil substituierten Acylacetale und die in der deutschen Patentanmeldung DE-A-196 16 770 sowie der internationalen Patentanmeldung WO-A-95/14075 beschriebenen Acyllactame werden ebenfalls bevorzugt eingesetzt. Auch die aus der deutschen Patentanmeldung DE-A-44 43 177 bekannten Kombinationen konventioneller Bleichaktivatoren können eingesetzt werden. Ebenso können Nitrilderivate wie Cyanopyridine, Nitrilquats, z. B. N-Alkyammoniumacetonitrile, und/oder Cyanamidderivate eingesetzt werden. Bevorzugte Bleichaktivatoren sind Natrium-4-(octanoyloxy)-benzolsulfonat, *n*-Nonanoyl- oder Isononanoyloxybenzolsulfonat (*n*- bzw. iso-NOBS), Undecenoyloxybenzolsulfonat (UDOBS), Natriumdodecanoyloxybenzolsulfonat (DOBS), Decanoyloxybenzoesäure (DOBA, OBC 10) und/oder Dodecanoyloxybenzolsulfonat (OBS 12), sowie N-Methylmorpholinum-acetonitril (MMA). Derartige Bleichaktivatoren sind im üblichen Mengenbereich von 0,01 bis 20 Gew.-%, vorzugsweise in Mengen von 0,1 bis 15 Gew.-%, insbesondere 1 Gew.-% bis 10 Gew.-%, bezogen auf die gesamte Zusammensetzung, enthalten.

Zusätzlich zu den konventionellen Bleichaktivatoren oder an deren Stelle können auch sogenannte Bleichkatalysatoren enthalten sein. Bei diesen Stoffen handelt es sich um bleichverstärkende Übergangsmetallsalze bzw. Übergangsmetallkomplexe wie beispielsweise Mn-, Fe-, Co-, Ru - oder Mo-Salenkomplexe oder -carbonylkomplexe. Auch Mn-, Fe-, Co-, Ru-, Mo-, Ti-, V- und Cu-Komplexe mit N-haltigen Tripod-Liganden sowie Co-, Fe-, Cu- und Ru-Amminkomplexe sind als Bleichkatalysatoren geeignet, wobei solche Verbindungen bevorzugt eingesetzt werden, die in der DE 197 09 284 A1 beschrieben sind.

Textilwaschmittel können in Abhängigkeit von ihrer speziellen Rezeptur zur Wäschevorbehandlung, zum Waschen und zur Nachbehandlung, d.h. als Weichspüler, etc. eingesetzt werden. Ein Einsatz in einem Nachbehandlungsmittel (z.B. Weichspüler) kann primär die Verbesserung der Hydrophilie bewirken, aber erst später, d.h. in einem nach dem Tragen erfolgenden Waschprozess zu einem sichtbaren Erfolg führen.

Vorbehandlungsmittel, die die erfindungsgemäß verwendeten Partikel enthalten, enthalten als weitere Inhaltsstoffe vorzugsweise anionische und nichtionische Tenside, ggf. Bleichmittel und weitere Komponenten. Liegen die Vorbehandlungsmittel in Form von Sprays vor, enthalten sie in der Regel noch Lösungsmitte, wie Benzin.

Textilwaschmittel, die in flüssiger bis gelförmiger Form vorliegen, können von 5-40 Gew.-%, vorzugsweise von 15-30 Gew.-%, flüssige nichtionische Tenside, 1-20 Gew.-%, vorzugsweise 5- 15 Gew.-%, anionische Tenside, bis zu 10 Gew.-%, vorzugsweise bis zu 5 Gew.-% Zucktenside, bis zu 20 gew.-%, vorzugsweise von 5 bis 15 Gew.-%, Seife, bis zu 10 Gew.-%, vorzugsweise von 1 bis 7 Gew.-%, Citrat, sowie ggf. Enzyme, Aufheller, Farbstoff, Parfum, Polymere (z.B. gegen Vergrauung) und/oder Phosphonate.

Ein Nachbehandlungsmittel, wie Textilweischspüler, enthalten neben den erfindungsgemäß eingesetzten Partikeln kationische Tenside sowie ggf. weitere übliche Inhaltsstoffe und Lösungsmittel.

### Beispiele

Die Verbesserung der Schmutzablösung bzw. die Reduzierung der Wiederanschmutzbarkeit wurde durch Messung der Veränderung der Hydrophilie von textilen Oberflächen bestimmt. Textillappen in einer Größe von 2 cm x 8 cm wurden für 24 Stunden in
- A: Wasser
- B: 2,5%iges SiO₂-Sol (erhältlich von Merck KGaA, Darmstadt, 10%-ig)
- C: 2,5%iges SiO₂-Sol (erhältlich von Merck KGaA, Darmstadt, 10%-ig) + 0,1 % Sokalan^{®} HP22 (Polyethylenglykol-Vinylacetat-Polymer, Handelsprodukt der BASF AG)
- D: 0,1% Sokalan^{®} HP22 (Polyethylenglykol-Vinylacetat-Polymer, Handelsprodukt der BASF AG)
gerührt. Anschließend wurden die Lappen getrocknet und das Wasseraufnahmevermögen (in g) gemessen. Bestimmt wurde das Wasseraufnahmevermögen mit einem handelsüblichen Tensiometer (Krüss K14). Das Textilprobestück wurde so lange der Wasseroberfläche von oben automatisch angenähert, bis der erste Wasserkontakt eine für das Gerät detektierbare Gewichtszunahme bewirkte. Anschließend wurde die weitere Gewichtszunahme bei arretiertem Textil über zwei Minuten gemessen.

Die Meßergebnisse sind in der folgenden Tabelle dargestellt, wobei die Steigerung der Hydrophilie in % bezogen auf den Wert der Behandlung mit Wasser angegeben ist. Die Hydrophilie des Textils nach der Behandlung mit Wasser wurde als 1 angenommen.

| | A | B | C | D |
|---|---|---|---|---|
| Baumwolle | 1 | 13 | 5 | -2,6 |
| Polyester/Baumwolle | 1 | 15 | 15 | 1,4 |

Die Meßergebnisse zeigen, daß sich die Hydrophilie bei Baumwolle und Baumwollmischgeweben deutlich steigern ließ.

## Patentansprüche

1. Verwendung von Partikeln mit einer Teilchengröße von 5 bis 500 nm zur Verbesserung der Schmutzablösung von und/oder Reduzierung der Wiederanschmutzbarkeit auf textilen Oberflächen von Baumwolle oder Baumwolle-Mischgeweben.

2. Verwendung nach Anspruch 1, **dadurch gekennzeichnet, dass** die Partikel eine Teilchengröße von 5 bis 250 nm aufweisen.

3. Verwendung nach einem der Ansprüche 1 oder 2, **dadurch gekennzeichnet, dass** die Partikel ausgewählt sind aus beliebigen Fällungskieselsäuren, Aerogelen, Xerogelen, Mg(OH)₂, Böhmit (Al(O)OH), ZrO₂, ZnO, CeO₂, Fe₂O₃, Fe₃O₄, TiO₂, TiN, Hydroxylapatit, Bentonite, Hektorit, SiO₂:CeO₂, SnO₂, In₂O₃:SnO₂, MgAl₂O₄, HfO₂, Solen, wie SiO₂-Solen, Al₂O₃-Solen oder TiO₂-Solen, sowie Gemischen der voranstehenden.

4. Verwendung nach einem der Ansprüche 1 bis 3, **dadurch gekennzeichnet, dass** die Partikel zur Textilausrüstung, in Textilwaschmitteln, zur Textilvorbehandlung oder -nachbehandlung eingesetzt werden.

5. Verwendung nach Anspruch 4, **dadurch gekennzeichnet, dass** die Partikel in den Mitteln in einer Menge von 0,01 bis 35 Gew.-%, bezogen auf das fertige Mittel, enthalten sind.

6. Verwendung nach einem der Ansprüche 4 oder 5, **dadurch gekennzeichnet, dass** die nanoskaligen Partikel in der Anwendungslösung in einer Menge von 0,001 bis 10 Gew.-%, vorzugsweise von 0,01 bis 2 Gew.-%, bezogen auf die Anwendungslösung, vorliegen.

7. Verwendung nach einem der Ansprüche 4 bis 6, **dadurch gekennzeichnet, dass** der pH-Wert der Anwendungslösung zwischen 6 und 12, insbesondere zwischen 7 und 10,5, liegt.

8. Verwendung nach einem der Ansprüche 1 bis 7, **dadurch gekennzeichnet, dass** die Oberflächen der Partikel modifiziert werden mit Komplexbildnern ausgewählt aus den Phosphonaten, wie 1-Hydroxyethan-1,1-diphosphonsäure, Aminotri(methylenphosphonsäure), Diethylentriamin-penta(methylenphosphonsäure) sowie 2-Phosphonobutan-1,2,4-tricarbonsäure (PBS-AM), die zumeist in Form ihrer Ammonium- oder Alkalimetallsalze vorliegen, Schwermetallkomplexbildnem, wie Ethylendiamintetraessigsäure oder Nitrilotriessigsäure in Form der freien Säuren oder als Alkalimetallsalze, deren Derivaten, Alkalimetallsalzen von anionischen Polyelektrolyten wie Polymaleaten und Polysulfonaten, sowie niedermolekularen Hydroxycarbonsäuren, wie Citronensäure, Weinsäure, Äpfelsäure, Milchsaure oder Gluconsäure bzw. deren Salzen.

9. Verwendung nach einem der Ansprüche 4 bis 8, **dadurch gekennzeichnet, dass** die Mittel Hydrophilierungsmittel ausgewählt aus der Gruppe aus Ethanol, n- oder i-Propanol, Butanolen, Ethyienglykolmethylether, Ethylenglykolethylether, Ethylenglykolpropylether, Ethylenglykolmono-n-butylether, Diethylenglykol-methylether, Diethylenglykolethylether, Propylenglykolmethyl-, -ethyl- oder -propyl-ether, dipropylenglykolmonomethyl-, oder -ethylether, Di-isopropylenglykolmonomethyl-, oder -ethylether, Methoxy-, Ethoxy- oder Butoxytriglykol, 1-Butoxyethoxy-2-propanol, 3-Methyl-3-methoxybutanol, Propylen-glykol-t-butylether, Alkohole, insbesondere C₁-C₄-Alkanole, Glykole und Polyole sowie bei Raumtemperatur flüssiges Polyethylenglykol, Carbonsäureester und beliebigen Gemischen der voranstehenden enthalten.

10. Verwendung nach einem der Ansprüche 1 bis 9, **dadurch gekennzeichnet, dass** die Partikel in flüssige bis gelförmige oder in fester Form vorliegende Mittel, insbesondere Pulver oder Kompaktate, wie Tabletten, eingearbeitet werden.

11. Verwendung nach einem der Ansprüche 1 bis 10, **dadurch gekennzeichnet, dass** zusätzlich Tenside, die ausgewählt sind aus den nichtionischen, anionischen, amphoteren und kationischen Tensiden sowie deren beliebigen Gemischen, eingesetzt werden.

## Claims

1. Use of particles having a particle size in the range from 5 to 500 nm for improving the soil detachment from and/or reducing the resoilability on textile surfaces of cotton or cotton blend fabrics.

2. Use according to Claim 1, **characterized in that** the particles have a particle size in the range from 5 to 250 nm.

3. Use according to Claim 1 or Claim 2, **characterized in that** the particles are selected from any desired precipitated silicas, aerogels, xerogels, Mg(OH)₂, boehmite (Al(O)OH), ZrO₂, ZnO, CeO₂, Fe₂O₃, Fe₃O₄, TiO₂, TiN, hydroxylapatite, bentonites, hectorite, SiO₂:CeO₂, SnO₂, In₂O₃ : SnO₂, MgAl₂O₄, HfO₂, sols, such as SiO₂ sols, Al₂O₃ sols or TiO₂ sols, and also mixtures thereof.

4. Use according to any one of Claims 1 to 3, **characterized in that** the particles are used for textile finishing, in textile-washing agents, for textile pretreatment or aftertreatment.

5. Use according to Claim 4, **characterized in that** the particles are present in the agents in an amount ranging from 0.01% to 35% by weight, based on the final agent.

6. Use according to Claim 4 or Claim 5, **characterized in that** the nanoscale particles are present in the use solution in an amount ranging from 0.001% to 10% by weight and preferably from 0.01% to 2% by weight, based on the use solution.

7. Use according to any one of Claims 4 to 6, **characterized in that** the pH of the use solution is between 6 and 12 and particularly between 7 and 10.5.

8. Use according to any one of Claims 1 to 7, **characterized in that** the surfaces of the particles are modified with complexing agents selected from the phosphonates, such as 1-hydroxyethane-1,1-diphosphonic acid, aminotrimethylenephosphonic acid, diethylenetriaminepentamethylenephosphonic acid and also 2-phosphonobutane-1,2,4-tricarboxylic acid (PBS-AM), which are usually present in the form of their ammonium or alkali metal salts, the heavy metal complexing agents, such as ethylenediaminetetraacetic acid or nitrilotriacetic acid in the form of the free acids or as alkali metal salts, their derivatives, alkali metal salts of anionic polyelectrolytes such as polymaleates and polysulphonates, and also low molecular weight hydroxy carboxylic acids, such as citric acid, tartaric acid, malic acid, lactic acid or gluconic acid, or salts thereof.

9. Use according to any one of Claims 4 to 8, **characterized in that** the agents contain hydrophilicizing agents selected from the group consisting of ethanol, n-propanol, i-propanol, butanols, ethylene glycol methyl ether, ethylene glycol ethyl ether, ethylene glycol propyl ether, ethylene glycol mono-n-butyl ether, diethylene glycol methyl ether, diethylene glycol ethyl ether, propylene glycol methyl ether, propylene glycol ethyl ether, propylene glycol propyl ether, dipropylene glycol monomethyl ether, dipropylene glycol monoethyl ether, diisopropylene glycol monomethyl ether, diisopropylene glycol monoethyl ether, methoxytriglycol, ethoxytriglycol, butoxytriglycol, 1-butoxyethoxy-2-propanol, 3-methyl-3-methoxybutanol, propylene glycol t-butyl ether, alcohols, especially C₁-C₄-alkanols, glycols and polyols and also room temperature liquid polyethylene glycol, carboxylic esters and any desired mixtures thereof.

10. Use according to any one of Claims 1 to 9, **characterized in that** the particles are incorporated in liquid to gellike or solid agents, especially powders or compacts, such as tablets.

11. Use according to any one of Claims 1 to 10, **characterized in that** surfactants selected from the nonionic, anionic, amphoteric and cationic surfactants and also any desired mixtures thereof are additionally used.

## Revendications

1. Utilisation de particules d'une taille particulaire de 5 à 500 nm pour améliorer l'enlèvement des salissures d'une surface textile de coton ou de coton mélangé et/ou pour diminuer sa propension à se salir à nouveau après nettoyage.

2. Utilisation selon la revendication 1, **caractérisé en ce que** les particules ont une taille particulaire de 5 à 250 nm.

3. Utilisation selon l'une des revendications 1 ou 2, **caractérisée en ce que** les particules sont choisies parmi les silices précipitées, les aérogels, les xérogels, Mg(OH)₂, la boémite (AI(O)OH), ZrO₂, ZnO, CeO₂, Fe₂O₃, Fe₃O₄, TiO₂, TiN, l'hydroxylapatite, la bentonite, l'hectorite, SiO₂:CeO₂, SnO₂, ln₂O3:SnO₂, MgAl₂O₄, HfO₂, les sols tels que le sol de SiO₂, le sol de Al₂O₃ ou le sol de TiO₂ et les mélanges de ceux-ci.

4. Utilisation selon l'une quelconque des revendications 1 à 3, **caractérisée en ce que** les particules sont utilisés pour l'apprêt de textile, dans les agents de lavage pour textiles, pour pretraitement de textiles ou de posttraitement de textiles.

5. Utilisation selon la revendication 4, **caractérisée en ce que** les particules sont contenues dans les compositions en une quantité de 0,01 à 35 % en poids sur la base de la composition finale.

6. Utilisation selon l'une des revendications 4 ou 5, **caractérisée en ce que** les particules nanoscopiques sont présentes dans la solution d'application en une quantité de 0,001 à 10 % en poids, de préférence de 0,01 à 2 % en poids, sur la base de la solution d'application.

7. Utilisation selon l'une quelconque des revendications 4 à 6, **caractérisée en ce que** la valeur du pH de la solution d'application est comprise entre 6 et 12, particulièrement entre 7 et 10,5.

8. Utilisation selon l'une quelconque des revendications 1 à 7, **caractérisée en ce que** les surfaces des particules sont modifiées avec des agents de complexation choisis parmi les phosphonates tels que l'acide 1-hydroxyéthan-1,1-diphosphonique, l'acide aminotri(méthylènephosphonique), l'acide diéthylènetriaminpenta(méthylènephosphonique) et l'acide 2-phosphonobutan-1,2,4-tricarboxylique (PBS-AM) qui sont généralement disponibles sous la forme de leurs sels d'ammonium ou de métaux alcalins, avec des agents de complexation de métaux lourds tels que l'acide d'éthylènediamine tétraacétique ou l'acide nitrilotriacétique sous la forme d'acides libres ou sous la forme de sels de métaux alcalins et leurs dérivés, des sels de métaux alcalins de polyélectrolytes anioniques tels que les polymaléates et les polysulfonates et les acides hydrocarboxyliques à faible poids moléculaire tels que l'acide citrique, l'acide tartarique, l'acide maléique, l'acide lactique ou l'acide gluconique et les sels de ceux-ci.

9. Utilisation selon l'une quelconque des revendications 4 à 8, **caractérisée en ce que** les compositions contiennent des agents hydrophilisants choisis dans le groupe constitué de l'éthanol, du n ou i-propanol, des butanols, de l'éther méthylique d'éthylèneglycol, de l'éther éthylique d'éthylèneglycol, de l'éther propylique d'éthylèneglycol, de l'éther mono-n-butylique d'éthylèneglycol, de l'éther méthylique de diéthylèneglycol, de l'éther éthylique de diéthylèneglycol, de l'éther méthylique, éthylique ou propylique de propylèneglycol, de l'éther monométhylique ou monoéthylique de dipropylèneglycol, de l'éther monométhylique ou monoéthylique de di-isopropylèneglycol, de méthoxy, d'éthoxy ou de butoxytriglycol, de 1-butoxyéthoxy-2-propanol, de 3-méthyl-3-méthoxybutanol, de l'éther t-butylique de propylèneglycol, d'alcools, plus particulièrement d'alcanols en C₁-C₄, de glycols et de polyols et de polyéthylèneglycol liquide à température ambiante, d'esters d'acide carboxylique et de mélanges de ceux-ci.

10. Utilisation selon l'une quelconque des revendications 1 à 9, **caractérisée en ce que** les particules sont incorporées dans des compositions liquides ou sous forme de gels ou de solides, plus particulièrement de poudres ou de compactés tels que des comprimés.

11. Utilisation selon l'une quelconque des revendications 1 à 10, **caractérisée en ce que** des agents tensioactifs choisis parmi les agents tensioactifs non ioniques, anioniques, amphotères et cationiques et des mélanges quelconques de ceux-ci sont utilisés de manière additionnelle.
